# FASCICULE DE BREVET EUROPEEN

(11) **EP 0 718 755 B1**
(45) Date de publication et mention de la délivrance du brevet: **31.07.2002**
(21) Numéro de dépôt: 95402809.8
(22) Date de dépôt: 13.12.1995
(51) Int. Cl.: G06F 7/52, G06F 7/544, G06F 7/49

(54) **Composant électronique capable notamment d'effectuer une division de deux nombres en base 4**
Elektronisches Bauelement, insbesondere fähig zum Ausführen einer Division zur Basis 4 von zwei Zahlen
Electronic component, more particularly capable of performing a radix 4 division of two numbers

(30) Priorité: 22.12.1994 FR 9415504
(43) Date de publication de la demande: 26.06.1996
(73) Titulaire: FRANCE TELECOM, 75015 Paris (FR)
(72) Inventeur: Dufal, Frédéric, F-38100 Grenoble (FR); Robert, Xavier, F-31170 Tournefeuille (FR)
(74) Mandataire: Casalonga, Axel

(56) Documents cités:
- BE-A- 666 449
- FR-A- 2 637 707
- US-A- 5 007 009
- INTERNATIONAL JOURNAL OF ELECTRONICS, vol. 64, no. 6, 1988, pages 885-896, XP000038094 MANDELBAUM D M: "MULTIPLE PARALLEL-ACTING ITERATIVE ARRAYS FOR FAST DIVISION"

## Description

L'invention concerne un composant électronique capable d'effectuer au moins une division de deux nombres binaires en base 2^{b} , b étant un entier supérieur à 1, notamment une division binaire en base quatre, et éventuellement d'autres opérations mathématiques au choix, comme par exemple une fonction "différence de deux nombres" et/ou une fonction de seuillage et/ou une fonction "valeur absolue" d'une différence.

Elle s'applique avantageusement mais non limitativement aux domaines du traitement audio et vidéo (où le calcul de divisions est nécessaire pour la quantification, fonction prévue dans tous les systèmes de compression de signaux), ou bien à l'estimation de mouvement pour le codage d'images.

On ne connait pas actuellement de tels composants.

L'invention concerne composant électronique, capable d'effectuer au moins une division binaire de deux nombres en base 2^{b}, b étant un entier supérieur à un, en particulier égal à deux, comprenant 2^{b}-1 soustracteurs connectés à l'entrée du composant, des moyens commandables de décalage de mots binaires, reliés à l'entrée du composant, des moyens commandables de concaténation de mots binaires, connectés entre la sortie des moyens de décalage et la sortie et l'entrée des soustracteurs, ainsi qu'un registre à décalage pour recevoir successivement des mots de résultat partiel de b bits formant ensemble un mot de résultat final représentatif de la division en base 2^{b} des deux nombres. Un tel composant électronique est décrit dans le document BE-A-666 449. Au sens de la présente invention, le mot "soustracteur" doit être interprété de façon large signifiant d'une façon générale "opérateur" capable d'effectuer une soustraction. Ainsi un tel soustracteur peut être réalisé par un soustracteur simple ou bien par une unité arithmétique et logique.

Le composant électronique selon l'invention est particulier en qu'il comprend en outre avantageusement des moyens de seuillage délivrant, en réponse à un mot de base, un mot de base seuillé par deux mots de seuil représentant des valeurs minimale et maximale de seuil, ces moyens de seuillage comportent deux des 2^{b}-1 soustracteurs, l'un des soustracteurs reçoit la valeur minimale de seuil et le mot de base, tandis que l'autre soustracteur reçoit la valeur maximale de seuil et le mot de base, et des moyens de sélection qui possèdent un état de seuillage, dans lequel ils sélectionnent le mot de base seuillé parmi les deux valeurs de seuil et le mot de base, en fonction de ladite information tirée des mots de sorties de ces deux soustracteurs.

Ainsi, les moyens de seuillage délivrent avantageusement un mot de résultat final seuillé à partir d'un mot de base tiré du contenu du registre à décalage et des deux valeurs minimale et maximale de seuil tenant compte de la dynamique souhaitée pour le mot de résultat final.

Une telle fonction de seuillage peut être mise en oeuvre indépendamment de la fonction "division". Néanmoins, en combinaison avec cette fonction de division, le seuillage du mot de résultat final permet de valider ce résultat dans une dynamique, c'est à dire un nombre de bits, souhaitée.

Selon un mode de réalisation dans lequel les mots numériques traités par le composant sont codés en complément à 2, ladite information tirée des mots de sortie des soustracteurs est le résultat de la comparaison des bits de poids fort de ces mots de sorties à la valeur 0 ou 1.

Le composant peut comprendre également des moyens d'élaboration d'arrondi du mot de résultat final contenu dans le registre à décalage. De tels moyens reçoivent le bit de poids faible du mot contenu dans le registre à décalage ainsi qu'une information représentative de la comparaison du mot de reste partiel correspondant à la valeur 0 ou 1, et délivrent un bit d'arrondi.

Selon un mode de réalisation, les moyens d'élaboration d'arrondi comportent des moyens d'incrémentation commandables, pour incrémenter ou non le mot de résultat final contenu dans le registre à décalage en fonction de la valeur du bit d'arrondi.

Le composant comprend également de préférence des moyens de détermination de la valeur absolue d'une différence, aptes à délivrer, le cas échéant, le diviseur et/ou le dividende positifs à partir d'un diviseur et/ou un dividende de signes quelconques reçus par un port d'entrée du composant. Il comprend également des moyens de rétablissement de signe, aptes à rétablir le signe du mot de résultat final à partir du signe du diviseur et du signe du dividende.

De tels moyens permettent de traiter des nombres de signes quelconques. En outre, bien que la fonction de détermination de la valeur absolue d'une différence soit utilisée ici en combinaison avec la fonction de division de deux nombres, elle pourrait l'être de façon totalement indépendante.

Les moyens de détermination de valeur absolue comportent avantageusement deux des 2^{b}-1 soustracteurs. Ils comportent également lesdits moyens de sélection, possédant un état dit de "valeur absolue", dans lequel ces moyens de sélection sélectionnent le mot de sortie de l'un des deux soustracteurs, en fonction de ladite information tirée des mots de sorties de ces deux soustracteurs.

Le composant selon l'invention permet ainsi d'effectuer en un seul cycle la valeur absolue d'une différence de deux nombres sans effectuer au préalable la différence de ces deux nombres. Bien entendu, si l'un de ces deux nombres est pris égal à 0, on réalise alors la valeur absolue de l'autre nombre.

Selon un mode préféré de réalisation, le composant comprend un port d'entrée pour recevoir certaines au moins des données à traiter par le composant, un port de sortie pour délivrer les données résultant de ces traitements et des moyens de stockage temporel connectés entre les sorties et les entrées des soustracteurs. Les moyens de contrôle comportent une logique de commande et des moyens de multiplexage d'entrée. Ces derniers sont reliés en entrée audit port d'entrée. Ils sont reliés en sortie aux entrées des soustracteurs, et sont commandés par ladite logique de commande. Les moyens de sélection comportent des moyens de comparaison des bits de poids fort des mots de sortie des soustracteurs à la valeur 0 ou 1, et des moyens de multiplexage de sortie. Ces derniers sont reliés en entrée aux sorties des soustracteurs et à certaines des sorties des moyens de multiplexage d'entrée. Ils sont par ailleurs commandés par lesdits moyens de comparaison, et sont connectés, en sortie, à une entrée des moyens de multiplexage d'entrée par l'intermédiaire des moyens de concaténation et des moyens de décalage.

Les moyens de stockage temporels peuvent comporter une première bascule D connectée entre les moyens de multiplexage de sortie et le port de sortie, tandis que les moyens de décalage comportent de préférence,
- une deuxième bascule D, connectée à une sortie des moyens de multiplexage d'entrée pour stocker le dividende positif choisi,
- des premiers moyens de multiplexage auxiliaires connectés, en entrée, à la sortie de la deuxième bascule D, à la sortie de la première bascule D, et à une sortie des moyens de multiplexage d'entrée, et commandables par ladite logique de commande,
- un décaleur commandable par ladite logique de commande et connecté à la sortie des premiers moyens de multiplexage auxiliaires,
- ainsi qu'une troisième bascule D connectée à la sortie du décaleur pour stocker les mots décalés successifs.

Les moyens de concaténation comportent de préference des deuxièmes moyens de multiplexages auxiliaires connectés entre les sorties des première et troisième bascules D, et une entrée des moyens de multiplexage d'entrée.

Selon un mode de réalisation particulièrement avantageux de l'invention, l'un des soustracteurs est formé par une unité arithmétique et logique.

Cette unité arithmétique et logique peut ainsi incorporer les moyens de détermination de valeur absolue et au moins une partie des moyens de rétablissement de signe.

Le composant selon l'invention peut ainsi s'intégrer notamment dans tout processeur incorporant une unité arithmétique et logique traitant des nombres à virgule fixe dans un environnement synchrone. Ce composant permet ainsi d'étendre les capacités et les performances d'un processeur, de garantir la validité du calcul et de mener éventuellement deux calculs en parallèle.

En d'autres termes, des instructions particulières réalisant des tranches de division en base 4 (calcul de 2 bits à chaque itération), calculant le maximum/minimum entre deux nombres, le seuillage d'un nombre, la valeur absolue d'une différence, complètent les instructions classiques d'une unité arithmétique et logique.

Le composant selon l'invention peut ainsi s'intégrer dans tout processeur, notamment un processeur de traitement du signal, utilisé dans des applications qui concernent essentiellement les domaines du traitement audio et vidéo (où le calcul de divisions est nécessaire pour la quantification, fonction prévue dans tous les systèmes de compression de signaux). Par ailleurs le calcul d'une différence de valeur absolue est souvent utilisé dans les algorithmes d'estimation de mouvement pour le codage d'images.

Il est particulièrement avantageux que le composant comprenne des moyens d'extension de la taille des chemins de données internes du composant, par rapport à la taille des chemins de données d'entrée externes sur lesquels est connecté ledit composant.

En d'autres termes les différents traitements effectués au sein du composant, le sont sur un nombre de bits supérieur à celui sur lequel sont codées les données d'entrée. On gère ainsi de manière intrinsèque les débordements internes éventuels alors que dans les unités arithmétiques et logiques classiques, de tels débordements sont gérés par des traitements d'exception prévoyant par exemple la mise à jour d'un "drapeau" ("flag" en langue anglaise), c'est à dire la mise à jour d'un bit particulier dans un registre d'état.

Par ailleurs un élargissement des chemins de données internes, qui, quoique avantageux pour un composant capable de réaliser une division en base quatre puisqu'il offre la possibilité d'effectuer des calculs internes (réutilisant un calcul précédent), par exemple des divisions internes, sans risque de débordement, n'est pas absolument indispensable à un tel composant, permet en combinaison avec seulement deux soustracteurs de réaliser un composant offrant une fonction de seuillage en minimisant les imprécisions de calcul après seuillage.

D'autres avantages et caractéristiques de l'invention apparaîtront à l'examen de la description détaillée d'un mode de réalisation nullement limitatif, illustré sur les dessins annexés sur lesquels :
- la figure 1 est un synoptique schématique d'un mode de réalisation du composant selon l'invention,
- les figures 2 à 5 illustrent plus en détail certains éléments du composant de la figure 1, et
- les figures 6 à 16 illustrent différents cas de fonctionnement du composant de la figure 1.

Bien que l'invention n'y soit pas limitée, on va maintenant décrire un composant capable d'effectuer notamment une division en base de 4 de deux nombres.

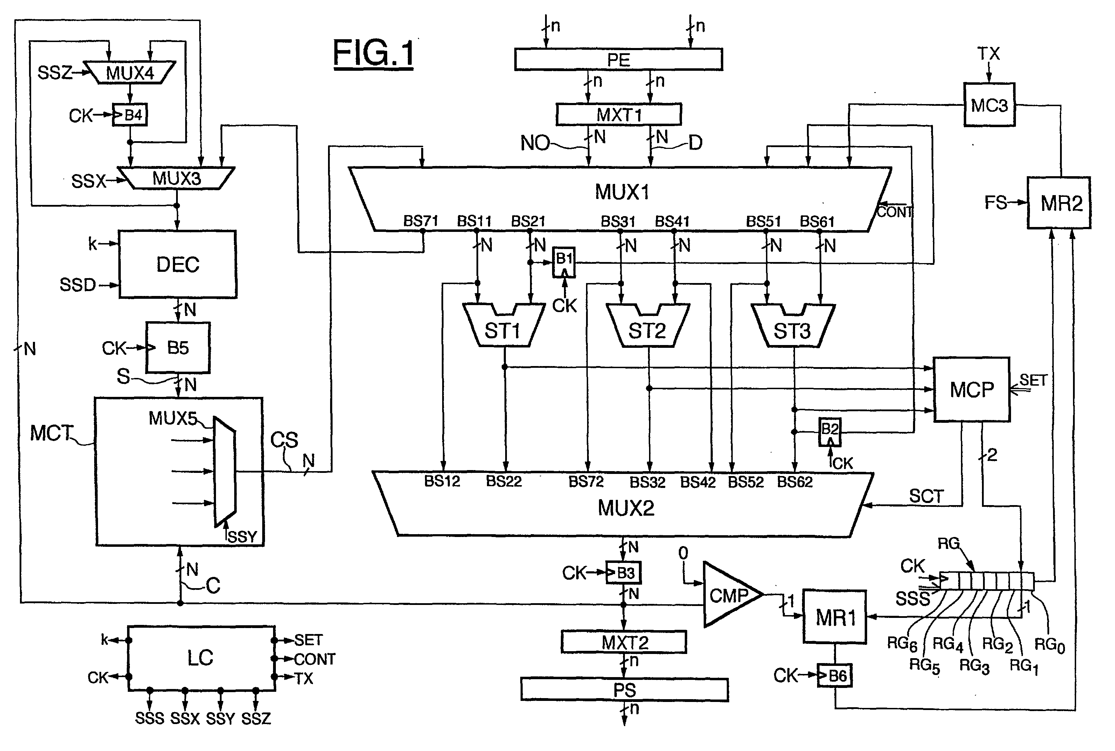

Tel qu'illustré sur la figure 1, l'architecture d'un tel composant, réalisé par exemple à partir de composants discrets et/ou par circuit intégré, s'articule essentiellement autour de trois soustracteurs ST1-ST3 connectés entre des moyens de multiplexage d'entrée, référencés MUX1, et des moyens de multiplexage de sortie, référencés MUX2.

Les sorties de ces trois soustracteurs sont également reliées à des moyens de comparaison MCP, dont on reviendra plus en détail ci-après sur la fonctionnalité, aptes à délivrer un signal SCT de commande du multiplexeur de sortie MUX2, en fonction de la valeur d'une information tirée des mots de sortie des soustracteurs, dont on reviendra plus en détail ci-après sur la signification, et en fonction d'un signal de commande d'état SET délivré par une logique de commande LC.

Lorsque le mot d'état SET correspond à un mode de fonctionnement de division, les moyens MCP délivrent en outre un mot de deux bits, représentatif du résultat partiel d'une tranche de division. Ce mot de résultat partiel est stocké dans un registre à décalage RG cadencé par un signal d'horloge CK et commandé par un signal de commande SSS. Comme on le verra plus en détail ci-après, à l'issu d'une opération de division, le contenu du registre à décalage sera représentatif du mot du résultat final de ladite division.

La sortie du multiplexeur MUX2 est connectée à un moyen de stockage temporel B3, tel qu'une bascule D, cadencé par le signal d'horloge CK.

La sortie de ce moyen de stockage temporel est rebouclée sur l'une des entrées du multiplexeur MUX1 par l'intermédiaire de moyens de décalage et de moyens de concaténation MCT.

Les moyens de décalage s'articulent essentiellement autour d'un décaleur DEC apte à décaler d'une valeur de décalage k, et selon un sens de décalage SSD, tous deux fournis par la logique de commande LC, un mot de base se présentant à son entrée, pour délivrer un mot décalé S et le stocker dans un registre spécifique B5, tel qu'une bascule D, cadencé par le signal d'horloge CK.

Le mot de base délivré en entrée du décaleur DEC est en fait le contenu d'un autre registre spécifique B4, tel qu'une bascule D, cadencé par le signal CK, connecté à l'entrée de ce décaleur DEC par un multiplexeur MUX3 commandé par le signal SSX.

La sortie de la bascule B4 d'une part, et la sortie du multiplexeur MUX3 d'autre part, sont rebouclées sur l'entrée de la bascule B4 par un autre multiplexeur MUX4, commandé par le signal de commande SSZ.

La sortie de la bascule B3 ainsi que la borne de sortie BS71 du multiplexeur MUX1 sont reliées aux deux entrées du multiplexeur MUX3.

Les moyens de concaténation MCT s'articulent essentiellement autour d'un multiplexeur MUX5, commandé par le signal de commande SSY, et connecté en entrée, d'une part à la sortie de la bascule B5, et, d'autre part, à la sortie de la bascule B3. La sortie de ces moyens de concaténation, délivre un mot concaténé CS à l'une des entrées du multiplexeur MUX1.

D'une façon générale, comme on le verre plus en détail ci-après, lorsqu'ils sont actifs, les moyens de concaténation MCT délivrent un mot concaténé, ou dividende partiel, CS à partir du mot décalé S stocké dans la bascule B5, et du mot de reste partiel C stocké dans la bascule B3. Plus précisément, le mot concaténé CS est obtenu par décalage du mot de reste partiel C, de deux bits vers la gauche, c'est-à-dire vers le bit de poids fort (MSB :"Most Significant Bit" en langue anglaise), les deux bits de poids faible de ce mot concaténé étant alors les deux bits de poids faible du mot décalé S contenu dans la bascule B5.

Le composant comporte par ailleurs des moyens d'élaboration d'arrondi délivrant éventuellement un bit d'arrondi pour le mot de résultat final contenu dans le registre à décalage RG.

Ces moyens d'élaboration d'arrondi comporte un comparateur CMP comparant le contenu de la bascule B3 à la valeur zéro pour délivrer un bit de comparaison qui, en compagnie du bit de poids faible du mot de résultat final contenu dans le registre à décalage RG, seront exploités dans des moyens MR1 susceptibles de prendre différentes configurations en fonction de la nature de l'arrondi souhaité, afin de délivrer un bit d'arrondi, ayant la valeur zéro ou 1, dans une bascule de type D, référencée B6.

Ces moyens d'élaboration d'arrondi comportent par ailleurs des moyens, référencés MR2, élaborant le résultat final arrondi, à partir du contenu du registre à décalage RG et de la valeur du bit d'arrondi contenu dans la bascule B6. En outre, ces moyens MR2 permettent également de rétablir le signe du résultat, à partir d'un signal de commande SS, compte tenu du signe initial du dividende N0 et du divideur D.

Il est également prévu sur le rebouclage du registre à décalage RG sur l'entrée du multiplexeur MX1, des moyens MC3, commandés par un signal de commande TX, destiné, comme on le verra plus en détail ci-après, à extraire sur commande en fonction de la parité de la valeur de décalage initial k, les bits significatifs souhaités pour le résultat final.

Par ailleurs, certaines entrées du multiplexeur de sortie MUX2, telles que les entrée BE12, BE42, BE52 et BE72 sont directement reliées à certaines des sorties du multiplexeur MUX1, telles que les sorties BS11, BS41, BS51 et BS31.

Il est également prévu deux registres spécifiques, tels que des bascules D référencées B1 et B2, respectivement connectés entre la borne de sortie BS21 des muliplexeurs MUX1 et l'une de ses entrées, et entre la sortie du soustracteur ST3 et l'une des entrées du multiplexeur MUX1.

A l'entrée de ce composant est prévu un port d'entrée PE composé par exemple d'une pluralité de registres d'entrée tels que des bascules D, destinés à recevoir des mots de données d'entrée de n bits.

De même, il est prévu un port de sortie PS pour délivrer en sortie des mots de n bits, après traitement par le composant.

Cependant, il est avantageusement prévu des moyens MXT1 d'extension de la taille des chemins de données internes du composant, de sorte que un mot d'entrée de n bits est étendu à N bits en complétant le mot de n bits à gauche du bit de poids fort, par N-n bits égaux au MSB du mot de n bits. Bien entendu, des moyens homologues MXT2 de réduction du nombre de bits des mots sont prévus immédiatement en amont du port de sortie PS. On reviendra plus en détail ci-après sur l'intérêt de cette extension de la taille des chemins de données internes du composant.

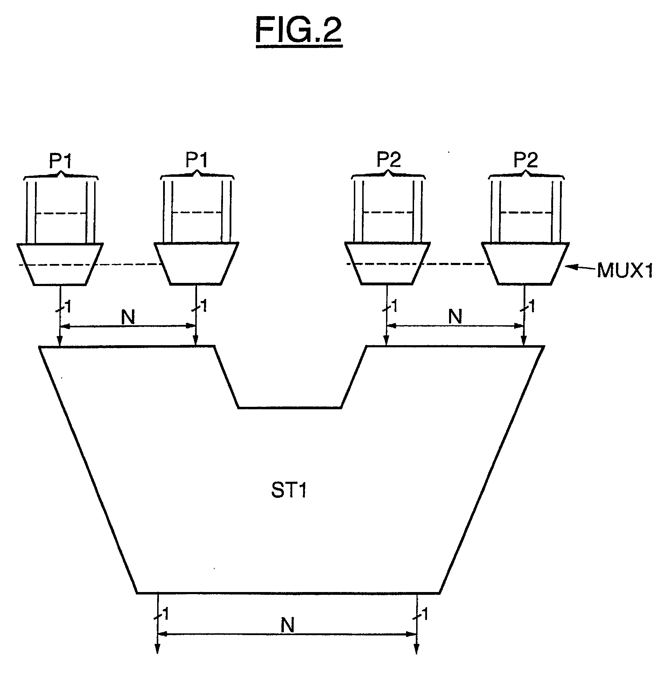

Dans l'exposé qui précède, et en conformité avec la figure 1, des termes tels que multiplexeur, bascule, soustracteur ont été employés à des fins de simplification comme s'il s'agissait d'éléments uniques, alors qu'ils sont adaptés pour être connectés sur des chemins de données internes de N bits. En fait, comme illustré plus précisément sur les figures 2 à 5, chaque soustracteur peut être composé d'un groupe de N soustracteurs à un bit, montés en cascade.

De même, le multiplexeur d'entrée MUX1, par exemple, se compose en fait, d'au moins autant de multiplexeurs qu'il y de bits entrant dans les soustracteurs (figure 2). Tous les multiplexeurs connectés à une même entrée d'un soustracteur doivent cependant avoir le même nombre de bornes d'entrée (P1 ou P2) comme illustré sur la figure 2.

De même, les différentes bascules du composant peuvent être N bascules de 1 bit connectées en parallèle.

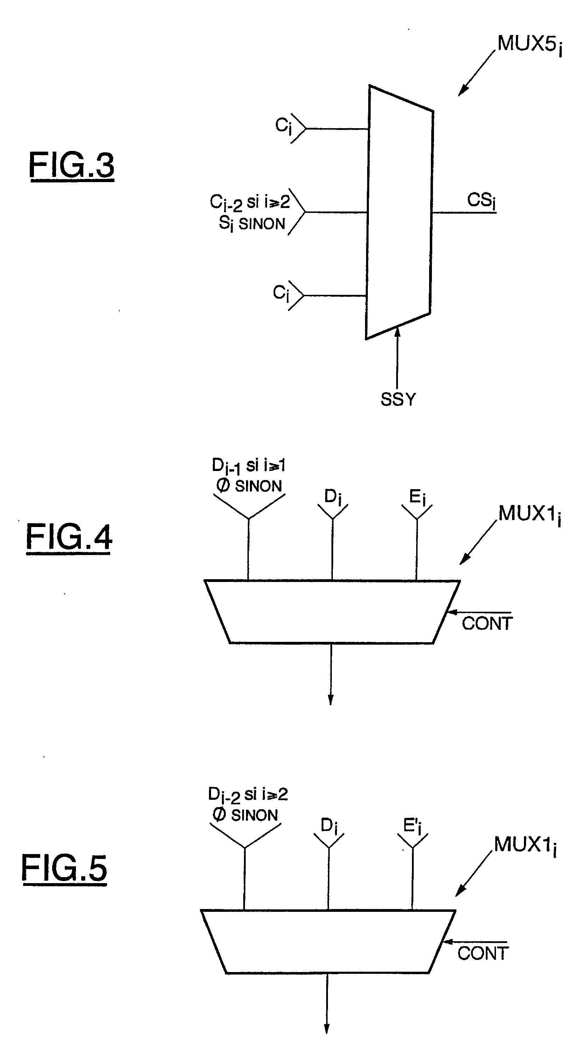

En ce qui concerne les moyens de concaténation MCT, ceux-ci sont en fait constitués dans l'exemple de réalisation illustré ici, de N multiplexeurs MUX5, câblés comme illustré sur la figure 3. Plus précisément, le i^{ème} multiplexeur MUX5ᵢ reçoit sur une première entrée le i^{ème} bit Sᵢ du mot décalé S. Il reçoit par ailleurs, de façon câblée, sur une deuxième entrée, soit le i-2^{ème} bit du mot C contenu dans la bascule B3, si i est supérieur ou égal à 2, soit le i^{ème} bit Sᵢ du mot décalé contenu dans la bascule B5, si i est égal à 0 ou 1. Enfin, une troisième du multiplexeur MUX5ᵢ reçoit le i^{ème} bit Cᵢ du mot contenu dans la bascule B3.

Ainsi, le mot de sortie CS des multiplexeurs MUX5 est soit égal au mot décalé S si les multiplexeurs sont commutés sur la première entrée, soit aux mots concaténés s'ils sont commutés sur la deuxième entrée, soit au mot C contenu dans la bascule B3.

On va maintenant décrire en détail, en se référant plus particulièrement aux figures 4 et suivantes, le fonctionnement du composant selon l'invention dans le cas d'une division de deux nombres en base 4.

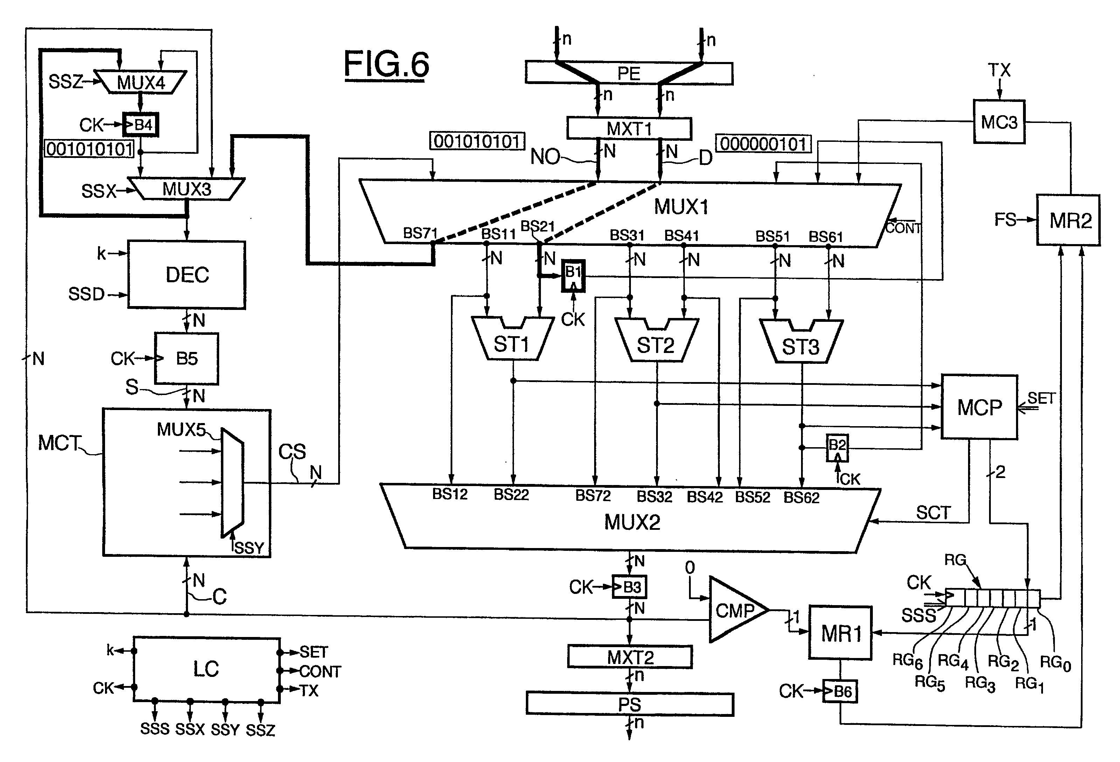

Sur les figures 6 et suivantes, les interconnexions principales entre les différents éléments du composant ont été représentés en trait gras pour chaque étape du fonctionnement. Ces différentes interconnexions au niveau des multiplexeurs sont obtenues par des commandes appropriées de ceux-ci à partir des signaux de commande correspondants, mais aussi à partir de leur câblage spécifique en amont compte tenu de la signification des données qui leur seront appliquées. L'homme du métier saura aisément réaliser ces différents câblages à partir de l'indication des interconnexions fonctionnelles souhaitées.

Plus précisément, comme on le verra plus en détail ci-après, il est nécessaire, dans un mode de fonctionnement en division, d'utiliser les produits 2D et 4D. Au lieu d'utiliser des multiplieurs pour déterminer ces nombres, il a été jugé plus simple d'utiliser un câblage particulier de certains multiplexeurs composant les moyens de multiplexage d'entrée MUX1, comme illustré sur les figures 4 et 5.

Ainsi, l'une des entrées du i^{ème} multiplexeur MUX1ᵢ, recevant par ailleurs le i^{ème} bit Dᵢ du diviseur D et le i^{ème} bit Eᵢ d'une autre donnée, est câblée de façon à recevoir le i-1^{ème} bit Dᵢ₋₁ du diviseur si i est supérieur à 1, ou 0 si i est égal à zéro. Si le multiplexeur MUX1ᵢ est commuté sur cette entrée, il fournira en sortie le diviseur D décalé de 1 vers la gauche, c'est-à-dire vers le bit de poids fort, ce qui correspond à une multiplication par deux du diviseur.

De même, comme illustré sur la figure 5, un autre i^{ème} multiplexeur, ou le même, pourra avoir une autre entrée câblée de façon à recevoir soit le i-2^{ème} bit Dᵢ₋₂ du diviseur, si i est supérieur ou égal à 2, ou la valeur zéro dans le cas contraire. Ces multiplexeurs délivreront en sortie le diviseur décalé de 2 bits vers la gauche, ce qui correspond à une multiplication du diviseur par quatre.

Dans le mode de réalisation décrit ici, les différentes données entrant et sortant du composant sont codées sur n bit en complément à 2. En d'autres termes, si le bit de rang zéro désigne le bit de poids faible (LSB : "Least Significant Bit" en langue anglaise), le bit de rang n-1, c'est-à-dire le bit de poids fort (MSB) représente le bit de signe. Si ce bit de signe a la valeur zéro, le nombre est positif et s'il a la valeur 1, le nombre est négatif.

Aussi, d'une façon générale, l'information tirée des mots de sortie des soustracteurs, et utilisée par les moyens MCP pour commander le multiplexeur de sortie MUX2, est alors le résultat de la comparaison des bits de poids fort de ces mots de sortie à la valeur 0 ou 1 ce qui permettra de déterminer si ces mots de sortie sont négatifs ou positifs.

On va maintenant décrire plus précisément le fonctionnement en mode division du composant en supposant que celui-ci reçoit, en tant que dividende N0, le nombre 85 et comme diviseur D le nombre 5. Le dividende est alors représenté, sur 8 bits par exemple, en notation en complément à 2, par le mot numérique 01010101 tandis que le diviseur D est représenté selon la même notation, par le mot numérique 00000101.

Après passage dans les moyens d'extension MXT1, le dividende N0 est représenté par un mot de N bits (N=9 par exemple) obtenu à partir du mot de n bits d'entrée (n=8) par duplication du bit de signe (figure 6).

Dans une première étape, la logique de contrôle LC commande les multiplexeurs MUX1, MUX3 et MUX4 de façon à stocker dans la bascule B4 le mot numérique de 9 bits représentatifs du dividende N0, et de façon à stocker dans la bascule B1 le mot numérique de 9 bits représentatifs du diviseur D.

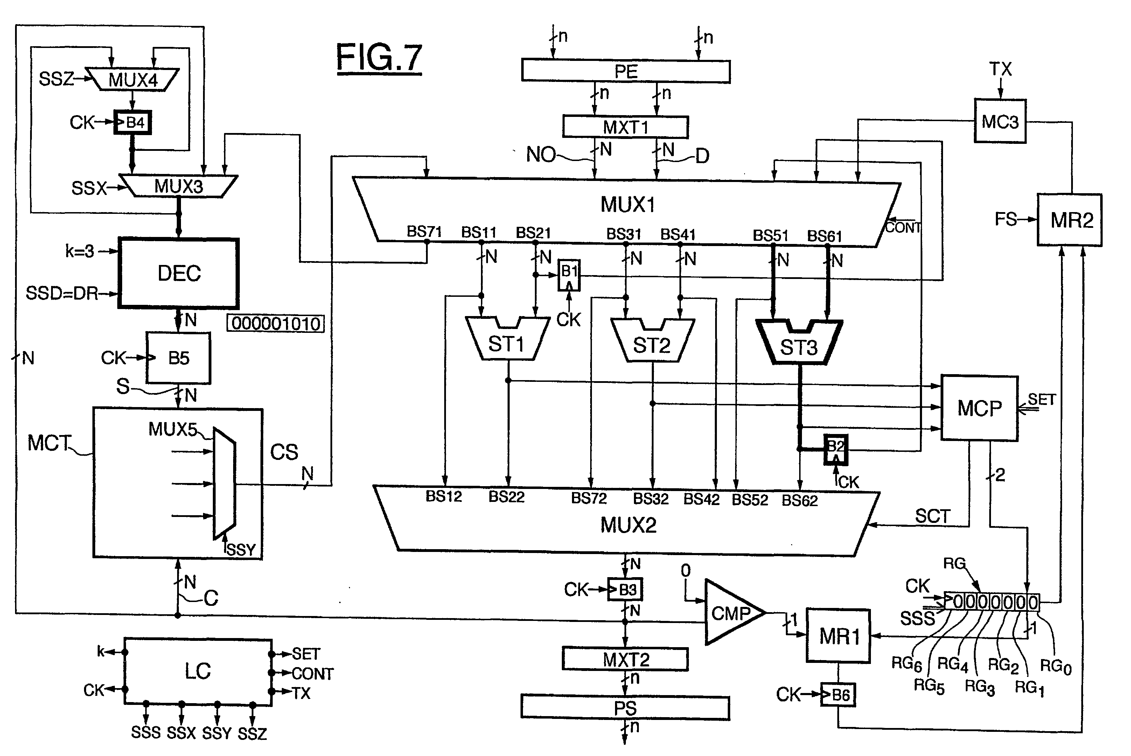

A l'étape suivante (figure 7) la logique de contrôle délivre au décaleur DEC une valeur de décalage initiale k, égale dans cet exemple à 3, qui va conditionner notamment le nombre de bits avant la virgule du mot de résultat final contenu dans le registre à décalage RG. Par ailleurs, la parité de k va implicitement automatiquement conditionner l'obtention ou non d'un bit du mot de résultat final représentatif d'un chiffre après la virgule.

Ainsi, comme on le verra plus en détail ci-après, si la valeur de décalage initiale est impaire, l'un au moins des bits du mot de résultat final contenu dans le registre à décalage sera représentatif d'un chiffre après la virgule.

Le décaleur, commandé par ailleurs par la logique de commande de façon à provoquer un décalage du mot contenu dans la bascule B4 vers la droite (SSD=DR), c'est-à-dire vers le bit de poids faible, délivre donc, aux fins de stockage dans la bascule B5, le mot décalé S égal à 000001010.

Enfin, au cours de ce cycle, le soustracteur ST3, recevant sur son entrée BS61 le diviseur D, et sur son entrée BS51, le nombre 4D effectue la soustraction de ces deux nombres de façon à stocker dans la bascule B2 le nombre 3D.

Enfin, dans les cases RG₀-RG_{N} du registre à décalage G (à des fins de simplification seules les sept premières cases RG₀-RG₆ ont été représentées) sont initialisées à zéro.

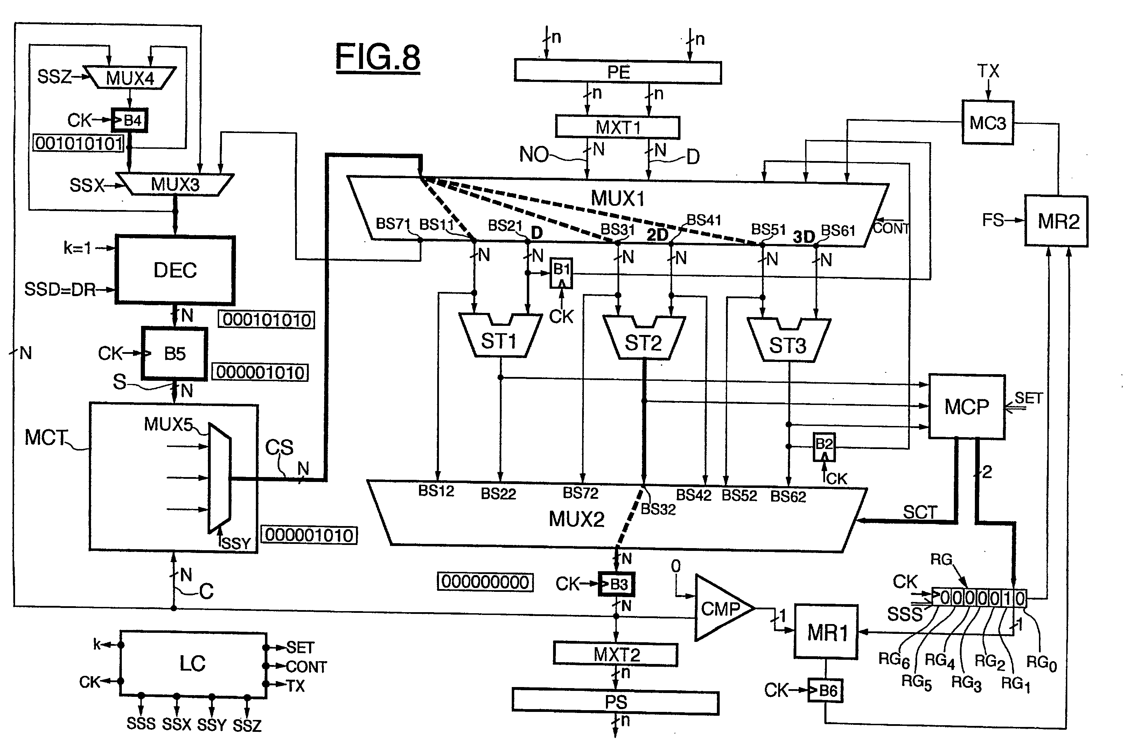

Le cycle suivant, illustré sur la figure 8, représente la première tranche de division du dividende N0 par le diviseur D.

De par la commande du multiplexeur MUX1, les trois multiples successifs (D, 2D et 3D) du diviseur D sont présentés aux trois entrées respectives BS21, BS41 et BS61 des soustracteurs ST1, ST2 et ST3.

Par ailleurs, simultanément, de par la commande du multiplexeur MUX5, le mot décalé S contenu dans la bascule B5, à savoir le mot 000001010 est délivré aux trois autres entrées respectives des trois soustracteurs.

Les moyens MCP sont alors configurés, dans cet état de fonctionnement de division, pour délivrer en sortie du multiplexeur MUX2, soit le dividende partiel, ici le dividende décalé, si celui-ci est strictement inférieur au diviseur (condition a)), soit le mot de sortie délivré par le premier soustracteur ST1, si le dividende partiel est supérieur ou égal au diviseur et strictement inférieur à deux fois le diviseur (condition b)), soit le mot de sortie du deuxième soustracteur si le dividende partiel est supérieur ou égal à deux fois le diviseur et strictement inférieur à trois fois le diviseur (condition c)), ou bien le mot de sortie du troisième soustracteur si le dividende partiel est supérieur ou égal à trois fois le diviseur (condition d)).

En d'autres termes, on délivre en sortie du multiplexeur, le dividende partiel si le bit de poids fort du mot de sortie du premier soustracteur est égal à un. Sinon, on délivre en sortie du multiplexeur MUX2 le mot de sortie du premier soustracteur si le bit de poids fort du mot de sortie du deuxième soustracteur est égal à un. Sinon, on délivre en sortie du multiplexeur MUX2, le mot de sortie du deuxième soustracteur si le bit de poids fort du mot de sortie du troisième soustracteur est égal à 1 et enfin sinon, on délivre le mot de sortie du troisième soustracteur.

Parallèlement, les moyens MCP délivrent un mot de reste partiel correspondant de 2 bits qui sera stocké dans les cases RG₀ et RG₁ du registre à décalage RG.

Plus précisément, les quatre mots de reste partiel correspondant aux quatre conditions a), b), c), d) évoquées ci-dessus, sont respectivement égaux à 00, 01, 10, 11.

Lors du cycle illustré sur la figure 8, le dividende partiel est égal à deux fois le diviseur, donc c'est le mot de sortie du deuxième soustracteur, qui est égal en l'espèce à 000000000 qui est stocké dans la bascule B3 tandis que le mot de résultat partiel 10 est stocké dans le registre à décalage.

Ensuite, la logique de commande LC délivre au décaleur DEC la valeur de décalage suivante, inférieure de 2 bits à la valeur de décalage présente, en l'espèce égale à 1. Le sens de décalage est conservé. Le dividende contenu dans la bascule B4 est alors décalé de 1 bit vers la droite de façon à obtenir un mot décalé S, stocké dans la bascule B5, et égal à 000101010.

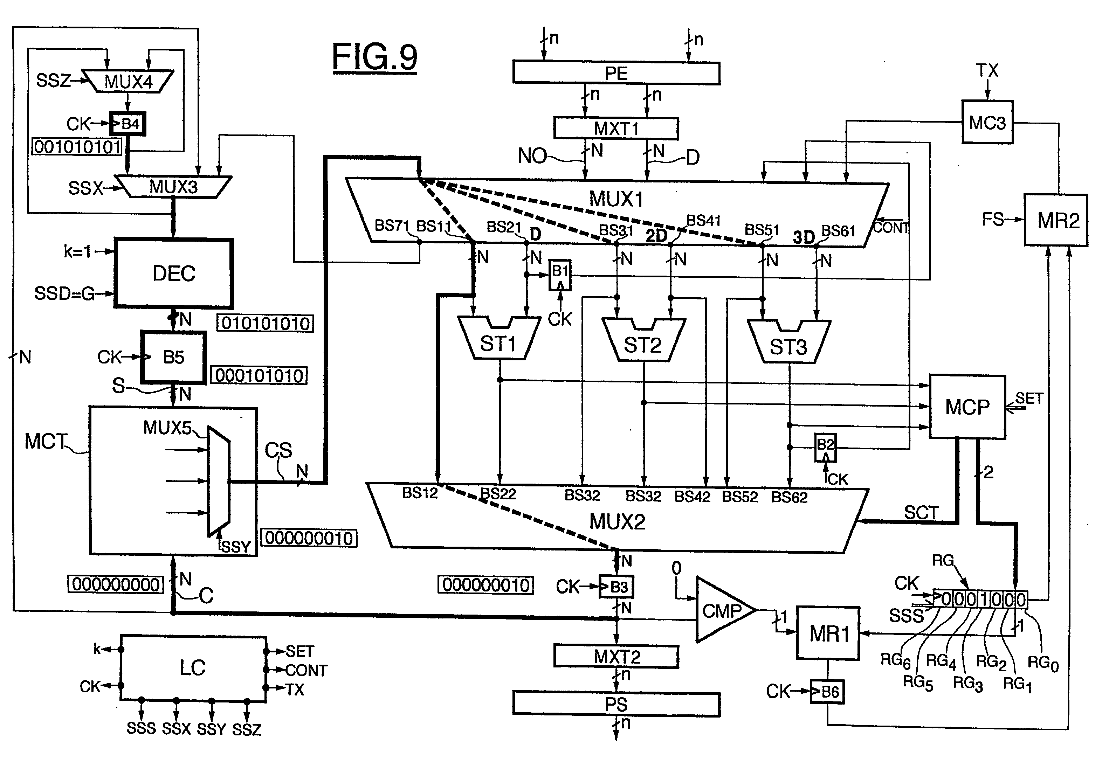

Au cycle suivant, illustré sur la figure 9, les opérations décrites précédemment se repètent avec comme dividende partiel CS, le mot concaténé (000000010) obtenu à partir du contenu de la bascule B3 au cycle précédent (000000000) et du mot décalé S contenu dans la bascule B5 et égal ici à 000101010.

Comme ce dividende partiel CS est strictement inférieur à D, il est délivré en sortie du multiplexeur MUX2, par l'intermédiaire par exemple de la connexion entre les bornes BS11 et BE12, et stocké dans la bascule B3 en tant que mot de reste partiel.

Parallèlement, le mot de résultat partiel correspondant, en l'espèce égal à 00 est stocké dans les deux cases RG₀ et RG₁ du registre à décalage tandis que le mot de résultat partiel précédent, à savoir le mot 10, est maintenant stocké dans les cases RG₂ et RG₃.

La logique de commande LC fournit alors une nouvelle valeur de décalage au décaleur DEC, différente de 2 bits par rapport à la valeur de décalage précédente. Cependant, étant donné que k était impair et précédemment égal à 1, la nouvelle valeur de décalage est égale à 1 avec un sens de décalage inversé, c'est-à-dire vers la gauche ou en d'autres termes vers le bit de poids fort (SSD=G). En conséquence, le mot décalé S contenu dans la bascule B5 est alors à la fin de ce cycle, égal au dividende décalé vers la gauche de 1 bit est complété au niveau du bit de poids faible par un zéro.

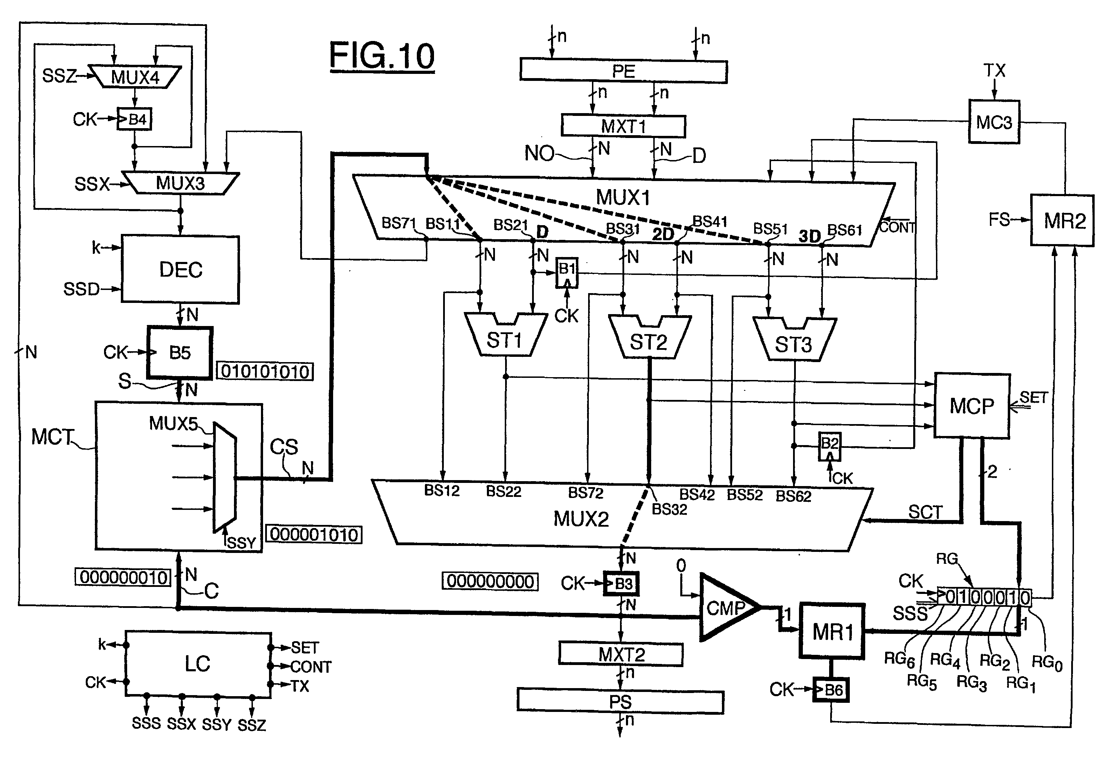

Au cycle suivant, (figure 10) les opérations de division évoquées ci-dessus se répètent pour la tranche de division suivante avec comme mot de dividende partiel CS, le mot concaténé obtenu (000001010) à partir du mot décalé S égal à 010101010 et du mot de reste partiel C égal à 000000010, de façon à donner un mot de reste partiel égal à 000000000 stocké dans la bascule B3, ainsi qu'un mot de résultat partiel égal à 10 stocké dans les cases RG₀ et RG₁ du registre à décalage RG.

Ainsi, à la fin de ce cycle, le contenu du registre à décalage RG est représentatif du mot de résultat final de la division du dividende N0 par le diviseur D.

Cependant, puisque la valeur de décalage initial était impaire, et que toutes les valeurs de décalage étaient par conséquent impaires, le bit contenu dans la cage RG₀ du registre à décalage est en fait le bit Q₁ du mot du résultat final représentatif du premier chiffre après la virgule. Les bits Q₀, Q₁, Q₂, Q₃, Q₄ respectivement stockés dans les cases RG₁-RG₅, représentent la partie entière du résultat final de la division.

Bien entendu, si l'on continuait le processus, c'est-à-dire si la logique de commande délivrait une nouvelle valeur de décalage égale à 3 associée à un sens de décalage vers la gauche, on obtiendrait dans le registre à décalage RG un nouveau mot de résultat final ayant une partie entière identique mais dont les trois bits stockés dans les cases RG₂, RG₁ et RG₀ seraient respectivement représentatifs des trois premiers chiffres après la virgule.

L'homme du métier peut remarquer ici que la division en base 4 permet d'augmenter le gain en vitesse puisque le résultat nécessite moins d'itération qu'une division en base 2. En effet, à chaque cycle, on délivre 2 bits de résultat au lieu d'un seul en base 2.

Avant la fin du cycle illustré sur la figure 10, un bit d'arrondi est élaboré et stocké dans la bascule B6.

Plus précisément, le mot de reste partiel finalement stocké dans la bascule B3 lors de ce cycle, est comparé dans le comparateur CMP à la valeur zéro de façon à délivrer un bit de comparaison. En d'autres termes, la comparaison du mot du reste partiel à la valeur zéro va déterminer si le dividende était un multiple ou non du diviseur. En fonction de la valeur de ce bit de comparaison et de la valeur du bit de poids faible du mot de reste final contenu dans le registre à décalage, c'est-à-dire contenu dans la case RG₀, les moyens MR1 agencés compte tenu du type d'arrondi souhaité, vont élaborer le bit d'arrondi qui va être stocké dans la bascule B6. En l'espèce, par exemple, en présence d'un bit de comparaison représentatif d'un mot de reste partiel non nul, le bit d'arrondi stocké dans la bascule B6 vaudra zéro si le bit de poids faible du mot contenu dans le registre à décalage vaut zéro, et 1 dans le cas contraire. Ceci revient dans le cas présent à arrondir le résultat à l'entier inférieur si le bit contenu dans la case RG₀ est égal à zéro ou à l'entier immédiatement supérieur si le bit contenu dans la case RG₀ est égal à 1.

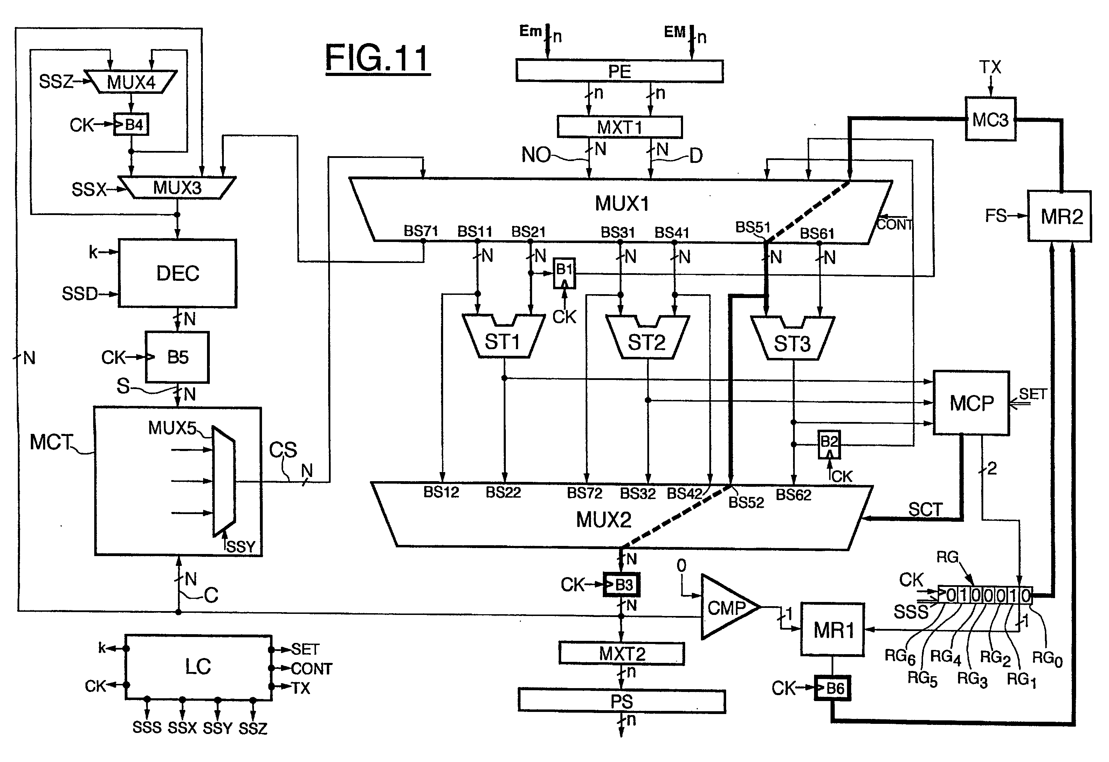

Au cycle suivant (figure 11) les moyens MR2 élaborent le mot de résultat final arrondi, à partir du contenu du registre à décalage RG et de la valeur du bit d'arrondi contenu dans la bascule B6. Plus précisément, les moyens MR2 effectuent la somme du mot contenu dans le registre à décalage RG et du bit d'arrondi contenu dans la bascule B6. En fait, cette somme revient à incrémenter ou non de 1 le mot de résultat final qui était contenu dans le registre RG.

Les moyens MC3 permettent alors, à partir du signal de commande TX dépendant de la valeur initiale de k et de sa parité, d'extraire la partie entière du mot de résultat final, en l'espèce les bits Q₀-Q₄ de ce mot. Ces moyens MC3 peuvent être tout simplement réalisés par un câblage approprié entre les cases du registre RG et le multiplexeur d'entrée MUX1 dans le cas où le composant n'effectue que des divisions à partir de valeurs de décalage initiales impaires et conduisant toujours un même nombre de chiffres après la virgule, ou alors peuvent comporter des multiplexeurs commandables dans le cas où les valeurs de décalage initiales sont paramétrables, tant en valeurs qu'en parités.

Le mot de résultat final est alors stocké dans la bascule B3.

Il s'avère particulièrement avantageux d'effectuer alors une opération de seuillage sur ce mot de résultat final de façon à garantir ce résultat dans la dynamique souhaitée par l'utilisateur pour les mots de sortie, c'est-à-dire dans le nombre de bits souhaité pour ces mots de sortie.

Les paramètres d'une fonction de seuillage d'un nombre ("clipping" en langue anglaise) sont une valeur de seuil minimale et une valeur de seuil maximale. Si le nombre est compris entre ces deux valeurs de seuil, le nombre seuillé par ladite fonction de seuillage est alors égal au nombre lui-même. Par contre, si ce nombre est supérieur ou égal à la valeur de seuil maximale le nombre seuillé est égal à cette valeur de seuil maximale. De même, si le nombre est inférieur ou égal à la valeur de seuil minimale, le nombre seuillé est égal à cette valeur de seuil minimale.

Au cours du cycle illustré sur la figure 11, la valeur de seuil minimale Em, et la valeur de seuil maximale EM, sont envoyées dans le port d'entrée PE.

D'une façon générale, les moyens de seuillage sont réalisés à partir de deux soustracteurs (l'un reçoit sur l'une de ses entrées la valeur de seuil minimale et sur son autre entrée le nombre à seuiller, tandis que l'autre reçoit sur l'une de ses entrées la valeur de seuil maximale et sur l'autre entrée le nombre à seuiller), et à partir des moyens MCP qui analysent le bit de poids fort des mots de sortie des deux soustracteurs de façon à déterminer la position du nombre à seuiller par rapport aux valeurs de seuil minimale et maximale.

Plus précisément, lorsque les moyens de comparaison MCP sont configurés, à l'aide du signal de commande SET, pour réaliser cette fonction de seuillage, ils commandent le multiplexeur MUX2, à l'aide du signal SCT, de façon à délivrer en sortie de ce multiplexeur soit la valeur de seuil minimale, soit la valeur de seuil maximale, soit le nombre lui-même.

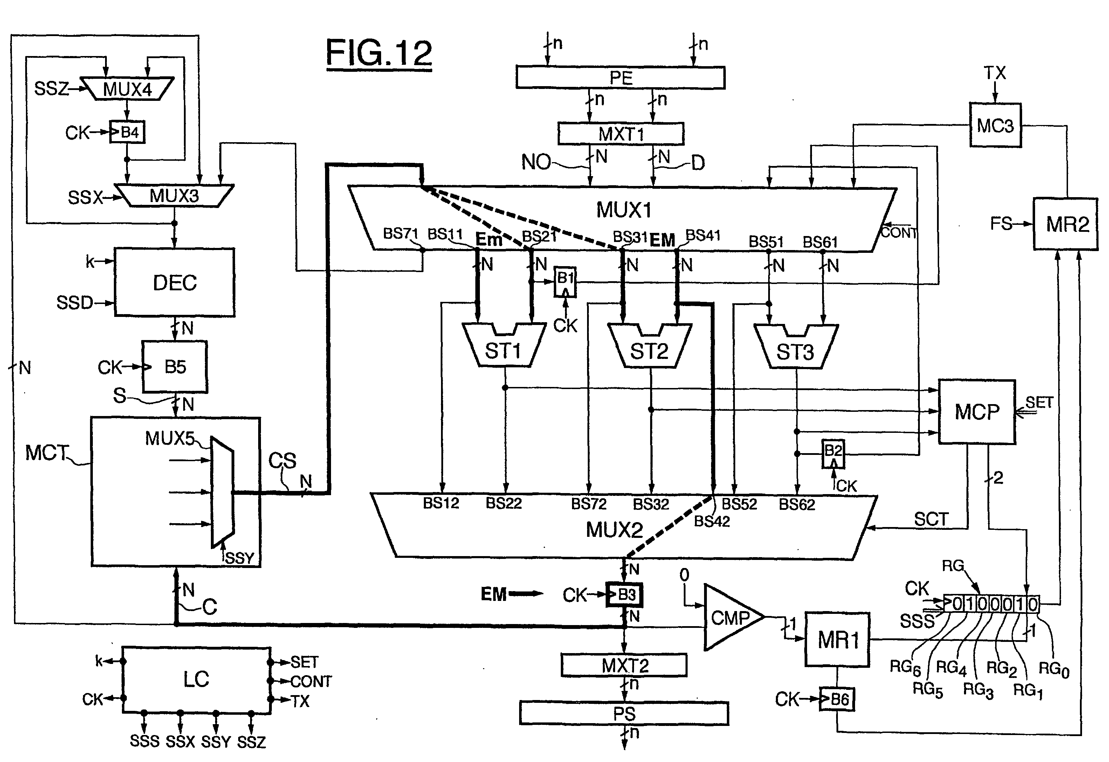

Lors du cycle illustré sur la figure 12, et dans l'hypothèse d'une dynamique souhaitée en sortie de 4 bits, la valeur de seuil maximale EM vaut (étendue sur 9 bits) 000001111.

Le mot de résultat final, après passage dans les moyens MC3 valant 000010001, les moyens MCP sélectionnent la borne BS 42 et stockent la valeur de seuil maximale EM dans la bascule B3.

S'il avait été nécessaire, dans un autre cas de figure, de sélectionner la valeur de seuil minimale, c'est la borne BS12 qui aurait été sélectionnée, et s'il avait été nécessaire de délivrer le nombre lui-même en sortie du multiplexeur MUX2, c'est la borne d'entrée BS 72, connectée directement à l'entrée du soustracteur recevant le nombre lui-même, qui aurait été sélectionnée.

L'homme du métier remarque donc ici que la fonction de seuillage permet de garantir la validité du résultat, c'est-à-dire soit de délivrer le nombre lui-même, soit de fournir un résultat le plus proche de la réalité, en délivrant soit la valeur de seuil maximale soit la valeur de seuil minimale.

En l'espèce, la valeur de seuil maximale égale à 1111 est la valeur la plus proche du résultat réel, dont la moins fausse. En l'absence de moyens de seuillage, une dynamique de sortie de 4 bits aurait conduit à un résultat en sortie égale à 0001 (sur les quatre derniers bits) ce qui aurait constitué un résultat encore plus faux.

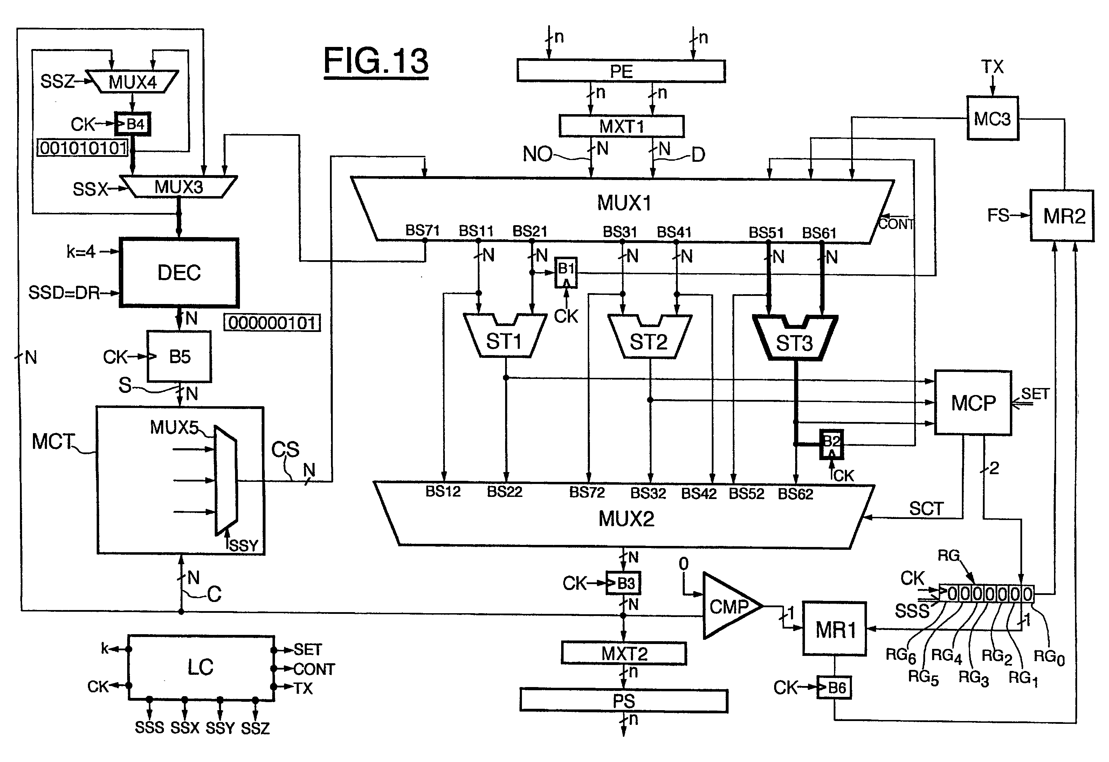

Les figures 13 à 16 illustrent une configuration de fonctionnement dans un mode division utilisant des valeurs de décalage k paires. Le principe générale de fonctionnement est le même que celui qui a été décrit en référence aux figures 6 à 12. Seules les différences par rapport à ces figures seront maintenant décrites.

Sur la figure 13, la valeur initiale de décalage est égale à la valeur 4. Le premier nombre décalé stocké dans la bascule B5, est donc égal à 000000101.

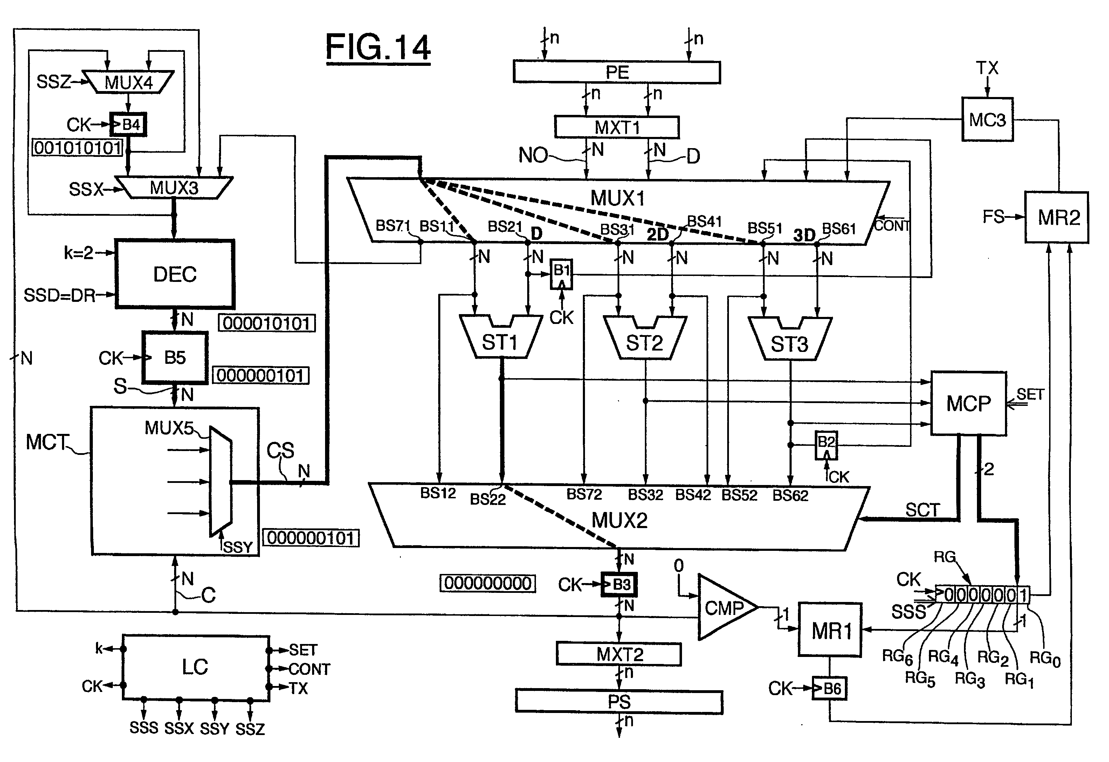

Ce nombre conduit (figure 14) un mot de reste partiel, stocké dans la bascule B3, égal à 000000000, et à un mot de résultat partiel, stocké dans les cases RG₀ et RG₁ du registre à décalage, égal à 01.

La valeur de décalage suivante, différente de 2 bits par rapport à la valeur de décalage initiale, est donc égale à deux et conduit à un mot décalé S, stocké dans la bascule B5, en vue du cycle suivant, égale à 000010101.

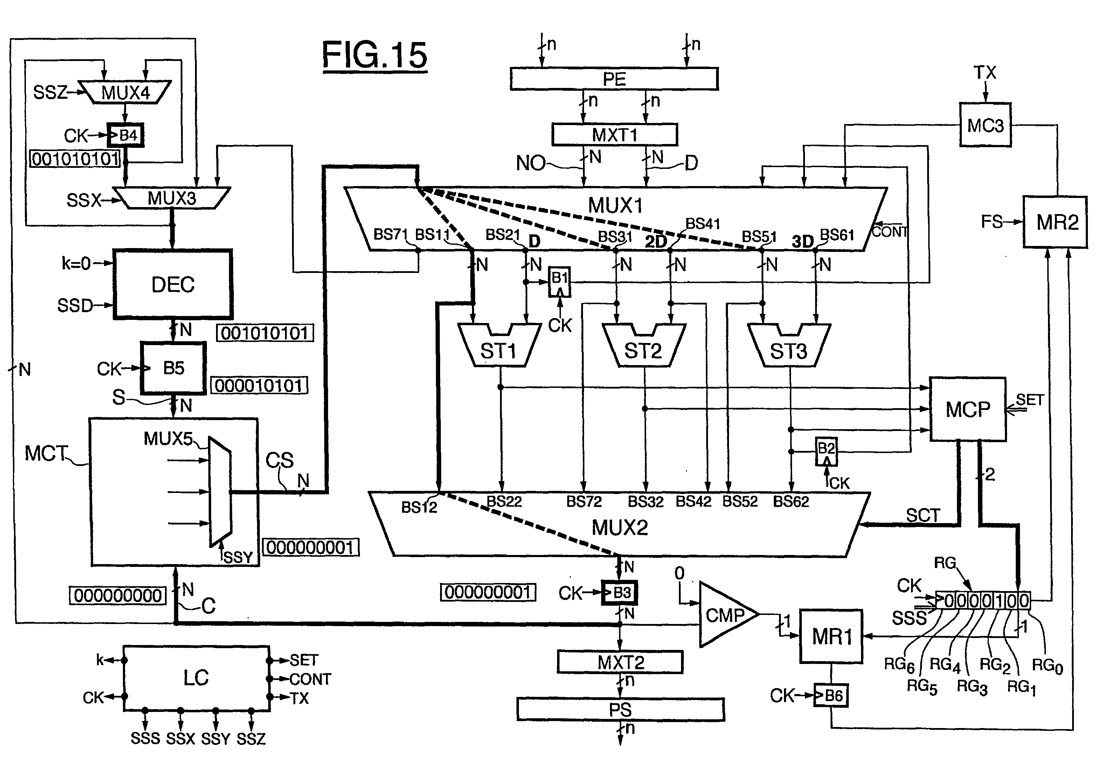

Lors de ce cycle suivant (figure 15) le dividende partiel CS résultant de la concaténation du mot décalé S et du mot C qui était contenu dans la bascule B3, conduit à un nouveau mot de reste partiel égal à 000000001 et un nouveau mot de résultat partiel égal à 00.

La valeur de décalage suivante est en fait la valeur zéro ce qui est équivalent à n'effectuer aucun décalage sur le dividente N0 égal à 001010101.

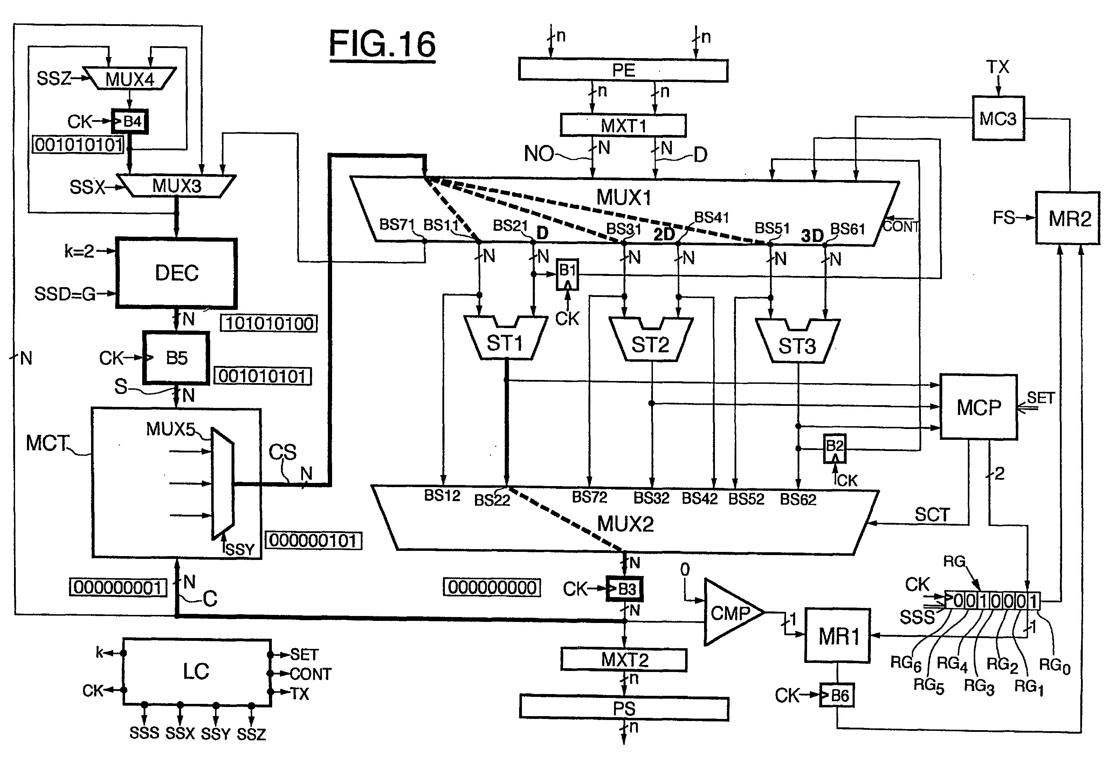

Lors du cycle suivant (illustré sur la figure 16) le mot de reste partiel, obtenu à partir du mot concaténé CS, lui-même obtenu à partir du dividente N0 non décalé et du mot de reste partiel du cycle précédent (illustré sur la figure 15), présente la valeur zéro, tandis que le nouveau mot de résultat partiel est égal à 01. On obtient donc dans le registre à décalage RG un mot de résultat final sur 6 bits représentant la partie entière du résultat de la division.

A ce stade il n'y a donc aucun bit du mot de résultat final qui est représentatif de chiffre après la virgule. Si l'utilisateur souhaite obtenir des chiffres après la virgule, il convient alors de préparer pour le cycle suivant, une nouvelle valeur de décalage différente de deux bits par rapport à la valeur de décalage précédente mais associée à un sens de décalage opposé c'est-à-dire vers la gauche. Ceci conduirait alors au mot décalé S égal à 101010100.

L'utilisation de ce mot décalé au cycle suivant permettrait l'obtention de deux nouveaux bits de mots de reste partiel représentant deux chiffres après la virgule.

Dans cette configuration de valeurs de décalage paires, et dans l'hypothèse où notamment on n'effectuerait aucune opération d'arrondi sur le mot de résultat final, les moyens MC3 sélectionnent la totalité des bits du registre à décalage RG.

Comme expliqué ci-avant, la fonction de seuillage effectuée postérieurement par les moyens de seuillage garantit la validité de ce résultat dans la dynamique souhaitée, par exemple 4 bits.

Dans tout ce qui a été exposé ci-avant, on a supposé que le dividende et le diviseur étaient des nombres positifs.

Bien entendu, l'invention permet le traitement de nombres de signes quelconques.

Dans ce cas, il est prévu que le composant calcule la valeur absolue du dividende et la valeur absolue du diviseur, ces valeurs absolues étant respectivement stockées dans les bascules B4 et B1.

La fonction valeur absolue peut être effectuée par des moyens de détermination de valeur absolue comportant deux des trois soustracteurs ainsi que les moyens MCP.

Plus précisément, le nombre dont on souhaite calculer la valeur absolue, est délivrée à l'une des entrées de l'un des soustracteurs, (par exemple l'entrée BS11 du soustracteur ST1) ainsi qu'à l'une des entrées du deuxième soustracteur (par exemple l'entrée BS41 du soustracteur ST2) tandis que la valeur "zéro" est délivrée à l'autre entrée de chaque soustracteur (par exemple les entrées BS21 et BS31). Celui des mots de sortie des deux soustracteurs, dont le bit de poids fort sera représentatif d'une différence positive, et donc de la valeur absolue du nombre, sera délivré en sortie du multiplexeur MUX2, par une commande appropriée émanant des moyens MCP.

Cette détermination des valeurs absolues est effectuée pour le dividende et pour le diviseur. Parallèlement, les moyens MCP sauvegardent le signal de chacun des deux nombres, dans un registre spécifique, ce signe étant égal au bit de poids fort de chaque nombre. Ils établissent par ailleurs la fonction OU EXCLUSIF de ces deux signes de façon à stocker cette valeur dans un registre spécifique FS. La valeur du bit stocké dans ce registre FS sera ensuite utilisé par les moyens MR2 pour le rétablissement du signe correct du mot du résultat final contenu dans le registre RG.

Plus précisément, les moyens MR2 réalisent alors la fonction (-1)^{FS}. (Q+L) ce qui revient à effectuer soit la somme Q+L soit l'opposé de cette somme. (Q désigne le mot de résultat final et L le bit d'arrondi).

Dans un mode de réalisation préférentiel de l'invention, non représenté ici à des fins de simplification, l'un des soustracteurs peut être remplacé par une unité arithmétique et logique. Cette unité arithmétique et logique est bien entendu capable d'effectuer une opération de soustraction, mais peut être également avantageusement utilisée pour effectuer l'opération de détermination de la valeur absolue du nombre ou bien la détermination de la fonction (-1)^{FS}. (Q+L), les moyens MR2 pouvant être alors omis dans ce mode de réalisation.

Les fonctions de détermination de valeur absolue, de seuillage, mais aussi des fonctions de différence simple entre deux nombres, qui ont été décrites en combinaison avec la fonction de division, peuvent être bien entendu effectuées de façon indépendante de toute opération de division. Ce sont en fait les moyens MCP, qui en fonction de la valeur du signal d'état SET, vont permettre l'élaboration de ces différentes fonctions, en combinaison avec les soustracteurs (au sens large du terme). Dans l'exposé ci-dessus, ces moyens ont été en partie décrits fonctionnellement. L'homme du métier saura aisément les réaliser matériellement, par exemple à l'aide d'algorithmes de synthèse logique. Il en est de même pour la logique de commande LC.

Alors que l'extension du nombre de bits des chemins de données internes ne s'avère pas indispensable pour la réalisation d'une opération de division seule, elle permet cependant d'éviter des débordements internes par exemple lors de soustractions successives, ou bien lors de calculs internes combinant divisions successives et/ou soustractions successives. La minimisation de ces risques de débordements internes permet ainsi de minimiser les imprécisions des mots de sortie finalement délivrés par le composant après seuillage éventuel.

## Revendications

1. Composant électronique, capable d'effectuer au moins une division binaire de deux nombres en base 2^{b}, b étant un entier supérieur à un, comprenant 2^{b}-1 soustracteurs (STi) connectés à l'entrée du composant, des moyens (DEC) commandables de décalage de mots binaires, reliés à l'entrée du composant, des moyens (MCT) commandables de concaténation de mots binaires, connectés entre la sortie des moyens de décalage et la sortie et l'entrée des soustracteurs, ainsi qu'un registre à décalage (RG) pour recevoir successivement des mots de résultat partiel de b bits formant ensemble un mot de résultat final représentatif de la division en base 2^{b} des deux nombres, **caractérisé par le fait qu'**il comprend en outre des moyens de seuillage (MCP, STᵢ) délivrant, en réponse à un mot de base, un mot de base seuillé par deux mots de seuil (Eₘ, EM) représentant des valeurs minimale et maximale de seuil, et en ce que les moyens de seuillage comportent deux des 2^{b}-1 soustracteurs, l'un des soustracteurs recevant la valeur minimale de seuil et le mot de base, l'autre soustracteur recevant la valeur maximale de seuil et le mot de base, ainsi que des moyens de sélection, possédant un état de seuillage, dans lequel ils sélectionnent le mot de base seuillé parmi les deux valeurs de seuil et le mot de base, en fonction de ladite information tirée des mots de sorties de ces deux soustracteurs.

2. Composant électronique selon la revendication 1, **caractérisé par le fait que**
les 2^{b}-1 soustracteurs (STi) sont aptes à recevoir 2^{b}-1 premiers mots respectivement égaux aux 2^{b}-1 multiples successifs d'un diviseur positif choisi (D), et 2^{b}-1 deuxièmes mots,
**par le fait qu'**il comprend des moyens (MCP) pour sélectionner, parmi les 2^{b}-1 mots de sorties des soustracteurs et les 2^{b}-1 deuxièmes mots, un mot de reste partiel en fonction d'une information tirée des mots de sorties, et lui associer un mot de résultat partiel prédéterminé correspondant de b bits,
**par le fait que** les moyens (MCT) sont aptes à former un mot concaténé à partir d'un premier mot initial décalé de b bits vers le bit de poids fort et complété par les b bits de poids faible d'un deuxième mot initial,
**par le fait que** les moyens de décalage (DEC) sont aptes à former une succession de mots décalés à partir de décalages successifs, de valeur et de sens de décalage choisis, d'un dividende positif choisi,
et **par le fait qu'**il comprend des moyens de contrôle (LC) pour délivrer au moins un jeu ordonné de valeurs de décalage successives, associées toutes à un sens de décalage vers le bit de poids faible et décroissant successivement depuis une valeur initiale choisie en différant mutuellement de b bits, puis, au moins si la valeur de décalage initiale n'est pas multiple de b, au moins une valeur de décalage supplémentaire égale à b et associée à un sens de décalage vers le bit de poids fort, pour délivrer séquentiellement des deuxièmes mots successifs respectivement égaux au dividende initialement décalé puis aux mots concaténés successifs obtenus respectivement à partir des mots de reste partiel successifs, en tant que premiers mots initiaux, et des mots décalés successifs, en tant que deuxièmes mots initiaux, et pour stocker les mots de resultat partiel successifs dans le registre à décalage (RG), de façon à former le mot de résultat final représentatif de la division en base 2^{b} du dividende par le diviseur.

3. Composant selon la revendication 1 ou 2, **caractérisé par le fait que** les moyens de seuillage délivrent un mot de résultat final seuillé à partir d'un mot de base tiré du contenu du registre à décalage (RG) et des deux valeurs minimale et maximale de seuil tenant compte de la dynamique souhaitée pour le mot de résultat final.

4. Composant selon l'une des revendications précédentes, prise en combinaison avec la revendication 2, **caractérisé par le fait que** les mots numériques traités par le composant sont codés en complément à 2 et **par le fait que** ladite information tirée des mots de sortie des soustracteurs (STᵢ) est le résultat de la comparaison des bits de poids fort de ces mots de sorties à la valeur 0 ou 1.

5. Composant selon l'une des revendications précédentes, prise en combinaison avec la revendication 2, **caractérisé par le fait qu'**il comprend des moyens (MR1) d'élaboration d'arrondi du mot de résultat final contenu dans le registre à décalage, recevant le bit de poids faible du mot contenu dans le registre à décalage (RG) ainsi qu'une information représentative de la comparaison du mot de reste partiel correspondant à la valeur 0 ou 1, et délivrant un bit d'arrondi (L).

6. Composant selon la revendication 5, **caractérisé par le fait que** les moyens d'élaboration d'arrondi comportent des moyens d'incrémentation commandables (MR2), pour incrémenter ou non le mot de résultat final contenu dans le registre à décalage en fonction de la valeur du bit d'arrondi.

7. Composant selon l'une des revendications précédentes, **caractérisé par le fait qu'**il comprend des moyens de détermination de la valeur absolue d'une différence aptes à délivrer, le cas échéant, le diviseur et/ou le dividende positifs à partir d'un diviseur et/ou un dividende de signes quelconques reçus par un port d'entrée (PE) du composant, et **par le fait qu'**il comprend des moyens de rétablissement de signe, aptes à rétablir le signe du mot de résultat final à partir du signe du diviseur et du signe du dividende.

8. Composant selon la revendication 7 **caractérisé par le fait que** les moyens de détermination de valeur absolue comportent deux des 2^{b}-1 soustracteurs, ainsi que lesdits moyens de sélection, possédant un état dit de valeur absolue, dans lequel ils sélectionnent le mot de sortie de l'un des deux soustracteurs, en fonction de ladite information tirée des mots de sorties de ces deux soustracteurs.

9. Composant selon l'une des revendications précédentes, prise en combinaison avec la revendication 2, **caractérisé par le fait qu'**il comprend un port d'entrée (PE) pour recevoir certaines au moins des données à traiter par le composant, un port de sortie (PS) pour délivrer les données résultant de ces traitements et des moyens de stockage temporel (B3) connectés entre les sorties et les entrées des soustracteurs,
**par le fait que** les moyens de contrôle comportent une logique de commande (LC) et des moyens de multiplexage d'entrée (MUX1), reliés en entrée audit port d'entrée, reliés en- sortie aux entrées des soustracteurs, et commandés par ladite logique de commande,
et **par le fait que** les moyens de sélection comportent des moyens (MCP) de comparaison des bits de poids fort des mots de sortie des soustracteurs à la valeur 0 ou 1, et des moyens de multiplexage de sortie (MUX2), reliés en entrée aux sorties des soustracteurs et à certaines des sorties des moyens de multiplexage d'entrée, commandés par lesdits moyens de comparaison, et connectés, en sortie, à une entrée des moyens de multiplexage d'entrée par l'intermédiaire des moyens de concaténation et des moyens de décalage.

10. Composant selon la revendication 9, **caractérisé par le fait que** les moyens de stockage temporels comportent une première bascule D (B3) connectée entre les moyens de multiplexage de sortie et le port de sortie, **par le fait que** les moyens de décalage comportent
une deuxième bascule D (B4), connectée à une sortie des moyens de multiplexage d'entrée (MUX1) pour stocker le dividende positif choisi (NO),
des premiers moyens de multiplexage auxiliaires (MUX3) connectés, en entrée, à la sortie de la deuxième bascule D (B4), à la sortie de la première bascule D (B3), et à une sortie des moyens de multiplexage d'entrée (MUX1), et commandables par ladite logique de commande,
un décaleur (DEC) commandable par ladite logique de commande et connecté à la sortie des premiers moyens de multiplexage auxiliaires (MUX3),
ainsi qu'une troisième bascule D (B5) connectée à la sortie du décaleur pour stocker les mots décalés successifs,
et **par le fait que** les moyens de concaténation comportent des deuxièmes moyens de multiplexages auxiliaires (MUX5) connectés entre les sorties des première et troisième bascules D, et une entrée des moyens de multiplexage d'entrée.

11. Composant selon l'une des revendications précédentes, **caractérisé par le fait que** l'un des soustracteurs est formé par une unité arithmétique et logique.

12. Composant selon les revendications 7 et 11, **caractérisé par le fait que** l'unité arithmétique et logique incorpore les moyens de détermination de valeur absolue et au moins une partie des moyens de rétablissement de signe.

13. Composant selon l'une des revendications précédentes, **caractérisé par le fait qu'**il est destiné. à être connecté sur des chemins de données d'entrée externes et qu'il comprend des moyens d'extension (MXT1) de la taille des chemins de données internes du composant, par rapport à la taille des chemins de données d'entrée externes.

## Patentansprüche

1. Elektronisches Bauelement, das mindestens eine binäre Division von zwei Zahlen zur Basis 2^{b} bewirken kann, wobei b eine ganze Zahl größer eins ist, mit 2^{b}-1 an den Eingang des Bauelements angeschlossenen Subtrahiereinrichtungenn (STi), einer zur Verschiebung von binären Worten steuerbaren Einrichtung (DEC), die mit dem Eingang des Bauelements verbunden ist, einer Einrichtung (MCT), die zur Verkettung von binären Worten steuerbar ist und zwischen dem Ausgang der Verschiebeeinrichtung und dem Ausgang und Eingang der Subtrahiereinrichtungen angeschlossen ist, sowie einem Verschieberegister (RG), um aufeinanderfolgend Divisorgebnisworte mit b Bits zu empfangen, die zusammen ein Endergebniswort bilden, das die Division zur Basis 2^{b} der zwei Zahlen darstellt,
**dadurch gekennzeichnet, dass**
es zudem Schwellenwert-Vergleichseinrichtungen (MCP, STᵢ) aufweist, die im Ansprechen auf ein Grundwort hin ein mit zwei Schwellenwertworten (E_{M}, EM) schwellenwertverglichenes Grundwort liefern, wobei die Schwellenwertworte (E_{M}, EM) minimale und maximale Schwellenwerte darstellen, und dadurch, dass
die Schwellenwert-Vergleichseinrichtungen zwei der 2^{b}-1 Subtrahiereinrichtungen aufweisen, wobei eine der Subtrahiereinrichtungen den minimalen Schwellenwert und das Grundwort empfängt und die andere Subtrahiereinrichtung den maximalen Schwellenwert und das Grundwort empfängt, sowie eine Auswahleinrichtung aufweist, die einen Schwellenwertvergleichszustand aufweist, in dem sie das mit den zwei Schwellenwerten schwellenwertverglichene Grundwort und das Grundwort abhängig von den aus den Ausgangsworten der zwei Subtrahiereinrichtungen entnommenen Informationen auswählt.

2. Elektronisches Bauelement gemäß Anspruch 1, **dadurch gekennzeichnet, dass**
die 2^{b}-1 Subtrahiereinrichtungen (STi) 2^{b}-1 erste Worte, die jeweils gleich 2^{b}-1 aufeinanderfolgenden Vielfachen eines positiven, gewählten Divisors (D) sind, und 2^{b}-1 zweite Worte empfangen können, dass
es Einrichtungen (MCP) aufweist, um unter den 2^{b}-1 Ausgangsworten der Subtrahiereinrichtungen und den 2^{b}-1 zweiten Worten ein Teilrestwort abhängig von einer den Ausgangsworten entnommenen Information auszuwählen, und um ihm ein b Bits entsprechendes, vorbestimmtes Teilergebniswort zuzuordnen, dass
die Einrichtungen (MCT) ein verkettetes Wort ausgehend von einem ersten Anfangswort, das um b Bits in Richtung des hochwertigen Bits verschoben und durch die b wertniedrigen Bits eines zweiten Anfangsworts vervollständigt ist, bilden kann, dass
die Verschiebeeinrichtungen (DEC) eine Folge von verschobenen Worten ausgehend von aufeinanderfolgenden Verschiebungen, mit ausgewähltem Wert und ausgewählter Verschieberichtung eines ausgewählten positiven Dividenden bilden können, und dadurch, dass
es Steuereinrichtungen (LC) aufweist, um mindestens einen geordneten Satz aufeinanderfolgender Verschiebewerte zu liefern, die alle in einer Verschieberichtung zum wertniedrigen Bit assoziiert sind und sich aufeinanderfolgend ab einem gewählten Anfangswert verringern, indem sie sich jeweils um b Bits voneinander unterscheiden, dann, zumindest, wenn der anfängliche Verschiebewert kein Vielfaches von b ist, um mindestens einen zusätzlichen Verschiebewert gleich b und in einer Verschieberichtung zum werthohen Bit assoziiert zu liefern, um aufeinanderfolgend zweite aufeinanderfolgende Worte zu liefern, die jeweils gleich dem anfangs verschobenen Dividenden, dann den aufeinanderfolgenden verketteten Worten sind, die jeweils ausgehend von den aufeinanderfolgenden Teilrestworten als ersten Anfangsworten und den aufeinanderfolgenden verschobenen Worten als zweiten Anfangsworten erhalten werden, und zum Speichern der aufeinanderfolgenden Teilergebnisworte in dem Verschieberegister (RG), so dass das Endergebniswort gebildet wird, das die Division zur Basis 2^{b} des Dividenden durch den Divisor darstellt.

3. Bauelement nach Anspruch 1 oder 2, **dadurch gekennzeichnet, dass**
die Schwellenwert-Vergleichseinrichtungen ausgehend von einem aus dem Inhalt des Verschieberegisters (RG) entnommenen Grundwort und zwei minimalen und maximalen Schwellenwerten ein schwellenwertverglichenes Endergebniswort unter Berücksichtigung der gewünschten Dynamik für das Endergebniswort liefern.

4. Bauelement nach einem der vorangehenden Ansprüche, in Kombination mit Anspruch 2, **dadurch gekennzeichnet, dass**
die durch das Bauelement verarbeiteten digitalen Worte als Zweierkomplement kodiert sind und dass
die den Ausgangsworten der Subtrahiereinrichtungen (STᵢ) entnommene Information das Ergebnis des Vergleichs der hochwertigen Bits dieser Ausgangsworte mit dem Wert 0 oder 1 ist.

5. Bauelement nach einem der vorangehenden Ansprüche in Kombination mit Anspruch 2, **dadurch gekennzeichnet, dass**
es Einrichtungen (MR1) zur Rundungsverarbeitung des im Verschieberegister enthaltenen Endergebnisworts aufweist, wobei diese das wertniedrige Bit des im Verschieberegister (RG) enthaltenen Worts ebenso wie eine Information empfangen, welche den Vergleich des Teilrestworts entsprechend dem Wert 0 oder 1 darstellt, und ein Rundungs-Bit (L) liefert.

6. Bauelement nach Anspruch 5, **dadurch gekennzeichnet, dass**
die Rundungsverarbeitungseinrichtung steuerbare Inkrementiermittel (MR2) aufweist, um das im Verschieberegister enthaltene Endergebniswort abhängig von dem Wert des Rundungsbits zu inkrementieren oder nicht zu inkrementieren.

7. Bauelement gemäß einem der vorangehenden Ansprüche, **dadurch gekennzeichnet, dass**
es Einrichtungen zur Bestimmung des Absolutwerts einer Differenz aufweist, die geeignet sind, gegebenenfalls den positiven Divisor und/oder positiven Dividenden ausgehend von einem Divisor und/oder einem Dividenden von beliebigen Vorzeichen zu liefern, die über einen Eingangsanschluss (PE) des Bauelements empfangen werden, und dadurch, dass
es Vorzeichenwiederherstellungs-Einrichtungen aufweist, die das Vorzeichen des Endergebnisworts ausgehend von dem Vorzeichen des Divisors und dem Vorzeichen des Dividenden wiederherstellen können.

8. Bauelement gemäß Anspruch 7, **dadurch gekennzeichnet, dass**
die Einrichtung zur Bestimmung des Absolutwerts zwei der 2^{b}-1 Subtrahiereinrichtungen sowie die Auswahleinrichtungen aufweist, die einen Absolutwertzustand genannten Zustand besitzen, in dem sie das Ausgangwort der einen von zwei Subtrahiereinrichtungen abhängig von der aus den Ausgangsworten der zwei Subtrahiereinrichtungen entnommenen Information auswählen.

9. Bauelement gemäß einem der vorangehenden Ansprüche in Kombination mit Anspruch 2, **dadurch gekennzeichnet, dass**
es einen Eingangsanschluss (PE) zum Erhalten zumindest bestimmter, durch das Bauelement zu verarbeitender Daten, einen Ausgangsanschluss (PS) zum Liefern der sich aus den Verarbeitungen ergebenden Daten und eine Zwischenspeichereinrichtung (B3) aufweist, die zwischen die Eingänge und die Ausgänge der Subtrahiereinrichtungen angeschlossen ist, dass
die Steuereinrichtungen eine Steuerlogik (LC) und eine Eingangsmultiplex-Einrichtung (MUX1) aufweisen, die am Eingang mit dem Eingangsanschluss und am Ausgang mit den Eingängen der Subtrahiereinrichtungen verbunden ist und die von der Steuerlogik gesteuert wird, und dass
die Auswahleinrichtung Vergleichseinrichtungen (MCP) der hochwertigen Bits der Ausgangsworte der Subtrahiereinrichtungen mit dem Wert 0 oder 1 sowie eine Ausgangsmultiplex-Einrichtung (MUX2) aufweist, die am Eingang mit den Ausgängen der Subtrahiereinrichtungen und mit bestimmten der Ausgänge der Eingangsmultiplex-Einrichtung verbunden ist, die von den Vergleichseinrichtungen gesteuert wird und am Ausgang über Verkettungseinrichtungen und Verschiebeeinrichtungen an einen Eingang der Eingangsmultiplex-Einrichtung angeschlossen ist.

10. Bauelement nach Anspruch 9, **dadurch gekennzeichnet, dass**
die Zwischenspeichereinrichtung eine erste D-Flip-Flop-Schaltung (B3) aufweist, die zwischen der Ausgangsmultiplexeinrichtung und dem Ausgangsanschluss angeschlossen ist, dass die Verschiebeeinrichtung folgendes aufweist:
eine zweite D-Flip-Flop-Schaltung (B4), die an einen Ausgang der Eingangsmultiplex-Einrichtung (MUX1) angeschlossen ist, um den ausgewählten positiven Dividenden (NO) zu speichern,
eine erste Hilfsmultiplex-Einrichtung (MUX3), die am Eingang an den Ausgang der zweiten D-Flip-Flop-Schaltung (B4), an den Ausgang der ersten D-Flip-Flop-Schaltung (B3) und an einen Ausgang der Eingangsmultiplex-Einrichtung (MUX1) angeschlossen und durch die Steuerlogik steuerbar ist,
einen Verschieber (DEC), der durch die Steuerlogik steuerbar und an den Ausgang der ersten Hilfsmultiplex-Einrichtung (MUX3) angeschlossen ist, sowie
eine dritte D-Flip-Flop-Schaltung (B5), die an den Ausgang des Verschiebers angeschlossen ist, um die aufeinanderfolgenden verschobenen Worte zu speichern, und dadurch, dass
die Verkettungseinrichtung eine zweite Hilfsmultiplex-Einrichtung (MUX5) aufweist, die zwischen den Ausgängen der ersten und dritten D-Flip-Flop-Schaltungen und einem Eingang der Eingangsmultiplex-Einrichtung angeschlossen ist.

11. Bauelement nach einem der vorangehenden Ansprüche, **dadurch gekennzeichnet, dass**
eine der Subtrahiereinrichtungen durch eine Arithmetik- und Logik-Einheit gebildet ist.

12. Bauelement nach den Ansprüchen 7 und 11, **dadurch gekennzeichnet, dass** die Arithmetik- und Logik-Einheit eine Absolutwertbestimmungseinrichtung und mindestens einen Teil der Vorzeichenwiederherstellungseinrichtung beinhaltet.

13. Bauelement nach einem der vorangehenden Ansprüche, **dadurch gekennzeichnet, dass**
es an externe Eingangsdatenwege angeschlossen werden soll, und dass
es eine Erweiterungseinrichtung (MXT1) der Größe der internen Datenwege des Bauelements im Vergleich zur Größe der externen Eingangsdatenwege aufweist.

## Claims

1. Electronic component, capable of performing at least one binary division of two numbers to the base 2^{b}, b being an integer greater than one, [sic] comprising 2^{b}-1 subtracters (STi) connected to the input of the component, controllable means (DEC) of shifting binary words, connected to the input of the component, controllable means (MCT) of concatenating binary words, connected up between the output of the shifting means and the output and the input of the subtracters, as well as a shift register (RG) for receiving in succession partial-result words of b bits together forming a final-result word representative of the division to the base 2^{b} of the two numbers, **characterized in that** it moreover comprises thresholding means (MCP, STᵢ) delivering, in response to a base word, a base word thresheld by two threshold words (Eₘ, EM) representing minimum and maximum threshold values.. [sic] and **in that** the thresholding means include two of the 2^{b}-1 subtracters, one of the subtracters receiving the minimum threshold value and the base word, the other subtracter receiving the maximum threshold value and the base word, as well as selection means, possessing a thresholding state in which they select the thresheld base word among the two threshold values and the base word, depending on the said information item derived from the output words from these two subtracters.

2. Electronic component according to Claim 1, **characterized in that**
the 2^{b}-1 subtracters (STi) are able to receive 2^{b}-1 first words respectively equal to the 2^{b}-1 successive multiples of a chosen positive divisor (D), and 2^{b}1 second words,
**in that** it comprises means (MCP) for selecting, from among the 2^{b}-1 output words from the subtracters and the 2^{b}-1 second words, a partial-remainder word on the basis of an information item derived from the output words, and associating therewith a corresponding predetermined partial-result word of b bits,
**in that** the means (MCT) are able to form a concatenated word from a first initial word shifted b bits towards the most significant bit and supplemented with the b least significant bits of a second initial word,
**in that** the shifting means (DEC) are able to form a succession of shifted words from successive shifts, with chosen value and direction of shift, of a chosen positive dividend,
and **in that** it comprises control means (LC) for delivering at least one ordered set of successive shift values, all associated with a direction of shift towards the least significant bit and decreasing successively from a chosen initial value while differing mutually by b bits, and then, at least if the initial shift value is not a multiple of b, at least one additional shift value equal to b and associated with a direction of shift towards the most significant bit, so as sequentially to deliver successive second words respectively equal to the initially shifted dividend and then to the successive concatenated words obtained respectively from the successive partial-remainder words, in the guise of first initial words, and from the successive shifted words, in the guise of second initial words, and so as to store the successive partial-result words in the shift register (RG), in such a way as to form the final-result word representative of the division to the base 2^{b} of the dividend by the divisor.

3. Component according to Claim 1 or 2, **characterized in that** the thresholding means deliver a threshold final-result word from a base word derived from the contents of the shift register (RG) and from the two minimum and maximum threshold values taking into account the dynamic range desired for the final-result word.

4. Component according to one of the preceding claims, taken in combination with Claim 2, **characterized in that** the numerical words processed by the component are 2's complement coded and **in that** the said information item derived from the output words from the subtracters (STi) is the result of comparing the most significant bits of these output words with the value 0 or 1.

5. Component according to one of the preceding claims, taken in combination with Claim 2, **characterized in that** it comprises means (MR1) for rounding the final-result word contained in the shift register receiving the least significant bit of the word contained in the shift register (RG) as well as an information item representative of the comparison of the corresponding partial-remainder word with the value 0 or 1, and delivering a rounding bit (L).

6. Component according to Claim 5, **characterized in that** the rounding means include controllable incrementing means (MR2) for incrementing or not incrementing the final-result word contained in the shift register depending on the value of the rounding bit.

7. Component according to one of the preceding claims, **characterized in that** it comprises means for determining the absolute value of a difference which are able to deliver, if appropriate, the positive divisor and/or positive dividend from a divisor and/or dividend of any signs received by an input port (PE) of the component and **in that** it comprises sign retrieval means able to retrieve the sign of the final-result word from the sign of the divisor and from the sign of the dividend.

8. Component according to Claim 7, **characterized in that** the absolute value determining means include two of the 2^{b}-1 subtracters, as well as the said selection means, possessing a so-called absolute value state in which they select the output word from one of the two subtracters, depending on the said information item derived from the output words from these two subtracters.

9. Component according to one of the preceding claims taken in combination with Claim 2, **characterized in that** it comprises an input port (PE) for receiving some at least of the data to be processed by the component, an output port (PS) for delivering the data resulting from these processing operations and temporal storage means (B3) connected between the outputs and the inputs of the subtracters,
**in that** the control means include control logic (LC) and input multiplexing means (MUX1), input-connected to the said input port, and output-connected to the inputs of the subtracters, and controlled by the said logic control,
and **in that** the selection means include means (MCP) for comparing the most significant bits of the output words from the subtracters with the value 0 or 1, and output multiplexing means (MUX2), input-connected to the outputs of the subtracters and to some of the outputs of the input multiplexing means, controlled by the said comparison means, and connected, at output, to an input of the input multiplexing means via the concatenation means and shifting means.

10. Component according to Claim 9, **characterized in that** the temporal storage means include a first D flip-flop (B3) connected between the output multiplexing means and the output port, **in that** the shifting means include.
a second D flip-flop (B4), connected to an output of the input multiplexing means (MUX1) for storing the chosen positive dividend (NO),
first auxiliary multiplexing means (MUX3) connected, at input, to the output of the second D flip-flop (B4), to the output of the first D flip-flop (B3), and to the output of the input multiplexing means (MUX1), and controllable by the said control logic,
a shifter (DEC) controllable by the said control logic and connected to the output of the first auxiliary multiplexing means (MUX3),
as well as a third D flip-flop (B5) connected to the output of the shifter so as to store the successive shifted words,
and **in that** the concatenation means include second auxiliary multiplexing means (MUX5) connected between the outputs of the first and third D flip-flops, and an input of the input multiplexing means.

11. Component according to one of the preceding claims, **characterized in that** one of the subtracters is formed by an arithmetic and logic unit.

12. Component according to Claims 7 and 11, **characterized in that** the arithmetic and logic unit incorporates the absolute value determining means and at least a part of the sign retrieval means.

13. Component according to one of the preceding claims, **characterized in that** it is intended to be connected to external input data paths and that it comprises means (MXT1) for extending the size of the internal data paths of the component with respect to the size of the external input data paths.
